# EUROPEAN PATENT SPECIFICATION

(11) **EP 4 027 324 B1**
(45) Date of publication and mention of the grant of the patent: **15.10.2025**
(21) Application number: 21150955.9
(22) Date of filing: 11.01.2021
(51) Int. Cl.: G09F 9/30, G09F 21/04

(54) **DISPLAY DEVICE AND VEHICLE COMPRISING SAME**
ANZEIGEVORRICHTUNG UND FAHRZEUG DAMIT
DISPOSITIF D'AFFICHAGE ET VÉHICULE LE COMPRENANT

(43) Date of publication of application: 13.07.2022
(73) Proprietor: Alps Alpine Co., Ltd., Ota-ku, Tokyo 145-8501 (JP)
(72) Inventor: SURUGIU, Florin, 70771 Stuttgart (DE)
(74) Representative: Schmitt-Nilson Schraud Waibel Wohlfrom Patentanwälte Partnerschaft mbB

(56) References cited:
- WO-A1-2020/063633
- DE-B3- 102019 203 264
- GB-A- 2 549 821
- US-A1- 2018 070 467

## Description

The present invention relates to a display device comprising flexible layers which are interlocked with each other in an operating position of the display device. The invention further relates to a dashboard and a vehicle comprising such display device.

Such display devices are often known as flexible display device that is designed as a layer arrangement that can be stored within a surrounding arrangement, such as a dashboard of a vehicle, e.g. in a rolled up position. The individual flexible layers each typically have low inherent rigidity which makes it possible to arrange the display device so that it can be rolled up on a roller. Display contents can be displayed, for example, on an LED-based (LED - light emitting diode) screen or on an OLED-based (OLED - organic light emitting diode) screen, which is also flexible and can be rolled up with the adjacent supporting layer.

For example, DE 10 2019 203 264 B3 discloses an output device for a vehicle comprising a flexible display device which is arranged on a first roller so that it can be rolled up and a dispensing device which has a flexible stabilizing device for stabilizing the display device, which is also arranged so that it can be rolled up on a second roller. The display device and stabilization device have toothed structures which correspond to one another in shape. The toothed structures are fed to one another, whereby teeth of the first tooth structure engage in teeth of the second tooth structure, so that the display device and the stabilization device releasably connect to one another to form a display assembly. The display assembly with its engaged tooth structure, however, is still flexible in the operating position, since the elastic material of the flexible display device and dispensing device will stretch if a force is applied, e.g., in a normal direction of the display device.

WO 2020/063633 A1 discloses a display device comprising a first flexible display screen having a first display surface and a first surface facing away from the first display surface, a second flexible display screen having a second display surface and a second surface facing away from the second display surface, a first mating structure disposed on the first surface, and a second mating structure disposed on the second surface. The first flexible display screen and the second flexible display screen are fixedly connected via a mating connection between the first mating structure and the second mating structure. The display device is still quite flexible even in the assembled final operating position, since it interconnects two flexible parts with the result that the display device as a whole is still flexible in the operating position. For example, the elastic material of the two flexible parts will stretch if a force is applied, e.g., in a normal direction of the display device.

CN 109979329 A discloses a flexible display device having a display module divided into a first assembly and a second assembly combined into the display module. A first reel is used for winding or unwinding the first assembly, and a second reel is used for winding or unwinding the second assembly. The flexible display device has the advantages that winding is performed by dividing the display module, so that the stress received by the display panel when the display panel is wound is reduced, and cracks, film split and other risks of the display panel are avoided. It is focused on manual operation of the flexible display and provides a mechanism to pull a flexible display such that the two interlocked elements can be separated by a pulling force. Disadvantageously, the display can bend if a force is applied on the upper area in depth direction. In addition, the guiding and support structure is located only on the extremities of the display, and the two guiding structures can slide to each other in a plane of the display device so that the front side of the display device may be misaligned with the rear side.

US 2016/0161983 A1 discloses a flexible display panel which includes a display area and a peripheral area located on opposing sides of the display area. A first fixing part is configured to have a first restoring force that presses on the upper surface of the flexible display panel. The flexible display also includes a second fixing part located below a lower surface of the peripheral area of the flexible display panel. The second fixing part is configured to have a second restoring force that presses on the lower surface of the flexible display panel. Like CN 109979329 A, its concept is focused on manual operation of the flexible display and provides a mechanism for pulling a rolled flexible display. The rolled out display will still not be rigid and will shake in case of vehicle movement.

It is an object of the present invention to provide a display device comprising flexible layers which can be stored in a storing position separately, and which are interlocked with each other in an operating position of the display device, which has improved rigidity, particularly when being used in a vehicle, such as on a dashboard, during vehicle movement and when operated by a user.

The invention relates to a display device according to the appended claims. The invention further relates to a dashboard comprising such display device, and a vehicle comprising such display device or such dashboard.

According to an aspect, there is provided a display device comprising a flexible first layer with a first supporting structure and at least one flexible electronic display screen element and a flexible second layer with a second supporting structure. The first layer comprises a first side at which the at least one electronic display screen element is disposed and a second side opposite the first side which comprises a first interlocking structure with first interlocking elements. The second layer comprises a first side which faces the second side of the first layer and which comprises a second interlocking structure with second interlocking elements. A positioning device is configured to move the first layer and second layer from respective separate storage positions towards each other into an operating position, and is configured to bring during such movement the first and second interlocking elements successively to one another into a mutual engagement of respective ones of the first and second interlocking elements, such that the first layer and the second layer are coupled to each other in the operating position by the first and second interlocking elements. The positioning device is further configured to move the first layer and second layer back from the operating position into the respective storage positions thereby releasing the mutual engagement of respective ones of the first and second interlocking elements. When in mutual engagement, at least one of the first interlocking elements is configured to engage behind a respective one of the second interlocking elements. At least one of the first and the second supporting structures, preferably both, comprises at least one reinforcement material which is configured to prevent elongation of the respective supporting structure in a direction parallel to the respective layer when in the operating position in a state when the display device is operated by a user.

The present invention thus provides a display device with individual flexible layers which - on the one hand - can be stored in a respective storing position separately (e.g. can be rolled, such as within a housing inside a dashboard of a vehicle), and which - on the other hand - are interlocked with each other in a "rolled-out" operating position of the display device such that the overall display device in the operating position has improved rigidity and provides a rigid surface which can hardly be bent when moderate operating force (such as a user's touch) is applied in a state when the display device is operated by a user in the operating position. This is particularly achieved by the structure of the interlocking connection with interlocking elements engaging behind a respective one of the opposing interlocking elements and the reinforcement material of the respective supporting structure to avoid stretching or bending. With the provision of at least one of the interlocking elements, preferably a number of more than one, or all, engaging behind a respective one of the opposing interlocking elements, the first and second layers cannot be separated when the display device is in the operating position.

The invention thus provides advantages particularly when the display device is used in a vehicle, such as on a dashboard, during vehicle movement and/or when operated by a user.

At least some of the first interlocking elements have a first geometric shape and at least some of the second interlocking elements have a second geometric shape which is complementary to the first geometric shape. With such engaging-behind complementary shape, the first and second layers cannot be separated when the display device is in the operating position.

The first and second geometric shapes of the interlocking elements have rounded or angled portions which are configured to engage behind respective complementary rounded or angled portions of the respective other interlocking elements. In this way, the kind of interlocking can be adapted to, for example, the respective dimensions of the whole arrangement, and rolling-in and out paths of the first and second layers in and from the respective storage positions.

According to an embodiment, at least one of the first and second supporting structures comprises a first reinforcement material which extends along the plane of the respective layer. With such reinforcement material, a particular tensile strength in longitudinal and/or cross direction of the respective layer can be achieved according to the respective needs.

According to an embodiment, the first reinforcement material may comprise at least one metal plate extending along the plane of the respective layer. In a particular embodiment, it comprises a plurality of metal plates which are spaced from one another. According to an embodiment, the at least one metal plate may have a thickness of between 0.5 and 2 mm.

According to a further embodiment, at least one of the first and second supporting structures comprises a second reinforcement material which extends within one or more of the first and second interlocking elements in a direction perpendicular to the plane of the respective layer. With such arrangement, the strength of the respective supporting structure and layer can be further increased and the quality of the interconnection between interlocking elements and respective supporting structure can be improved.

Particularly, according to an embodiment, the second reinforcement material comprises one or more reinforcement pins which extend within one or more of the first and second interlocking elements.

According to an embodiment, at least one of the first and second reinforcement materials comprises at least one of the following: metal, particularly stainless steel; metal alloy; plastics material; ceramics; carbon fiber reinforced polymer; aramid fiber reinforced polymer; fiber glass reinforced polymer; or a compound thereof.

The at least one reinforcement material comprises a yield tensile strength between 200 and 3,700 MPa at room temperature and/or a uniform elongation of max. 4% at 1500 MPa at room temperature. With a reinforcement material having such reinforcing properties, it is possible to prevent elongation of the respective supporting structure in the longitudinal direction in the operating position of the display device. Preferably the specified forces are in the range of typical or maximum forces applied to the display device in a state when the display device is in use or is operated by a user, e.g. by a user's touch when pressing a button displayed on a touch screen.

According to an embodiment, at least one of the first and the second layers comprises a layer of elastomer material, preferably a rubber material, and one or more of the first and second interlocking elements comprises a plastics material, particularly a polycarbonate material, attached to the layer of elastomer material. With such material combination, the first and second layers are on the one hand flexible and elastic, and on the other hand the interlocking elements have sufficient rigidity for appropriate interconnection and mating.

According to an embodiment, at least one of the first layer and second layer comprises at least one centering element which is configured to engage with a corresponding counter element of the respective other of the first layer and second layer. The centering element and counter element are configured to restrict movement of one of the first and second layers relative to the respective other of the first and second layers in a direction parallel to the plane of the first and second layers, e.g. in a side direction when viewed from the front of the display device, when the first and second layers are coupled to each other in the operating position. With such arrangement, the first and second layers can be prevented from moving relative to one another in a direction of, e.g., the extension of the interlocking elements, which further improves rigidity of the whole arrangement. Preferably, the one or more centering elements have the form of an elevation or a recession formed at one side of at least one of the first and second layers.

According to an embodiment, the positioning device comprises a driving mechanism which engages at least one of the first and second layers at a first engagement side of the one of the first and second layers for moving the first and second layers from the respective storage position to the operating position. It further comprises a first guidance device which is configured to provide a counterforce on a second engagement side of the one of the first and second layers opposite the first engagement side against an engagement force applied by the driving mechanism, wherein the first guidance device comprises at least two rollers which are spanning a two-dimensional first guidance material between them which provides the counterforce to the one of the first and second layers, and/or a second guidance device which is provided on a side of the at least one flexible electronic display screen element when the first layer is moving in or from the storage position for protecting the electronic display screen element against scratches during movement, wherein the second guidance device comprises at least two rollers which are spanning a two-dimensional second guidance material between them.

In a further aspect, the invention relates to a dashboard comprising a display device as described herein, wherein the positioning device is configured to move the first layer and second layer from the respective separate storage positions towards each other into the operating position in which the at least one electronic display screen element is operable and positioned outside the dashboard.

Aspects and embodiments of the invention will now be described with reference to the accompanying drawings in which:
- Fig. 1: shows a perspective view of a display device according to an embodiment of the invention,
- Fig. 2: shows a side view of a display device according to the embodiment of Fig. 1,
- Fig. 3: shows schematic depictions of a first layer and second layer of a display device according to an embodiment of the invention,
- Fig. 4: shows a perspective view (Fig. 4A) and a cross-sectional view (Fig. 4B) of a portion of a display device according to an embodiment of the invention,
- Fig. 5: shows an exploded view of a portion of a display device according to an embodiment of the invention,
- Fig. 6: shows schematic depictions of interlocking structures according to various embodiments of the invention,
- Fig. 7: shows schematic depictions of a first layer and second layer of a display device with centering elements according to embodiments of the invention,
- Fig. 8A: shows a side view of a display device according to a further embodiment of the invention,
- Fig. 8B: shows a perspective view of a display device according to the embodiment of Fig. 8A,
- Fig. 9A: shows first and second guidance devices of a display device according to the embodiment of Fig. 8A in an isolated depiction,
- Fig. 9B: shows elements of the first and second guidance devices according to Fig. 9A in exploded view, and
- Fig. 10: shows a schematic view of a display device according to an embodiment installed on a dashboard of a vehicle.

Embodiments are described herein with reference to perspective, side and cross-sectional depictions that are schematic illustrations of embodiments and/or portions thereof. As such, variations from the shapes of the illustrations as a result, for example, from manufacturing techniques and/or tolerances may occur. Thus, embodiments described herein should not be construed as limited to the particular shapes or dimensions illustrated herein.

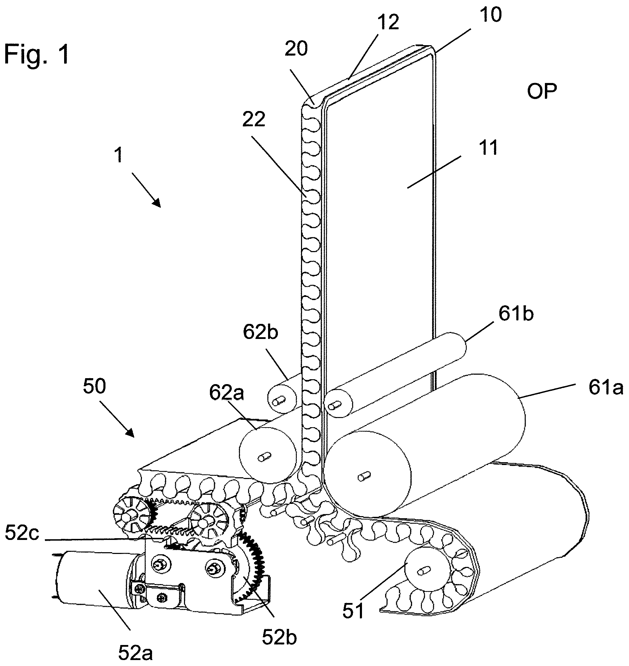

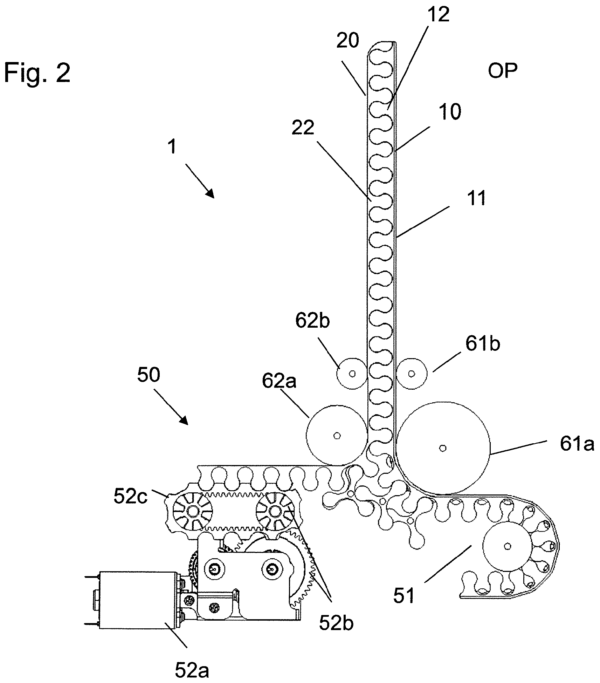

Aspects of the invention will now be described with respect to Figures 1 and 2 which show a perspective and side view of a display device according to an exemplary embodiment of the invention.

The display device 1 has a flexible display panel 10, herein referred to in the following as flexible first layer 10 (which is in fact a layer having multiple sub-layers or elements, such as plates or strips, as described herein), that can be rolled up, for example, on a roller 51 of a positioning device 50 for placing it in a storage position when the display device 1 is not in use. The first layer 10 comprises a supporting structure 12 and at least one flexible electronic display screen element 11, which may be or include, e.g., flexible substrates or films with liquid crystals (LCDs) or organic light-emitting diodes (OLEDs), or individual elements or portions thereof, or any other type of flexible optical display elements. The employed display screen elements shall not be limited to any particular technology. The first layer 10 comprises a first side at which the at least one electronic display screen element 11 is disposed and a second side opposite the first side which comprises the supporting structure 12 with a first interlocking structure as described in more detail below.

The display device 1 further includes a flexible support panel 20, herein referred to in the following as flexible second layer 20, comprising a second supporting structure 22, that can be rolled up in a storage position separate from the first layer 10. The second layer 20 comprises a first side which faces the second side of the first layer 10 and which comprises a second interlocking structure interlocked with the first interlocking structure of the first layer 10 when the display device 1 is in the operating position.

The first layer 10 can be wound around a first roll 61a, and the second layer 20 can be wound around a second roll 62a in any direction. The first and second roll 61a, 62a can be employed to control the display bending radius. Additional rolls 61b and 62b respectively disposed at a vertical distance from the first and second rolls 61a, 62a may be provided in order to stabilize the interlocked layer arrangement, i.e. add rigidity to the interlocked layer arrangement of the display device 1, when rolled out in the operating position.

The display device 1 can be rolled out into the operating position and rolled back into the storage position, e.g., underneath a surface of a dashboard of a vehicle, by means of a positioning device 50. For example, the positioning device 50 has an electric motor 52a for driving an arrangement of gears 52b which in turn move a transmission belt 52c which mates with the interlocking structure of the second layer 20. With moving the interlocking structure of the second layer 20, the positioning device also moves the interlocking structure of the first layer 10 which engage with each other as they are brought together by the positioning device 50.

The positioning device 50 thus moves the first layer 10 and second layer 20 from the respective separate storage positions towards each other into the operating position OP by bringing the first and second interlocking elements successively to one another into a mutual engagement of respective ones of the first and second interlocking elements. In this way, the first layer 10 and the second layer 20 are successively coupled to each other. Analogously, for example, when the display device 1 shall be stored inside the dashboard, the positioning device 50 moves the first layer 10 and second layer 20 back from the operating position OP into the respective storage positions thereby releasing the mutual engagement of respective ones of the interlocking elements.

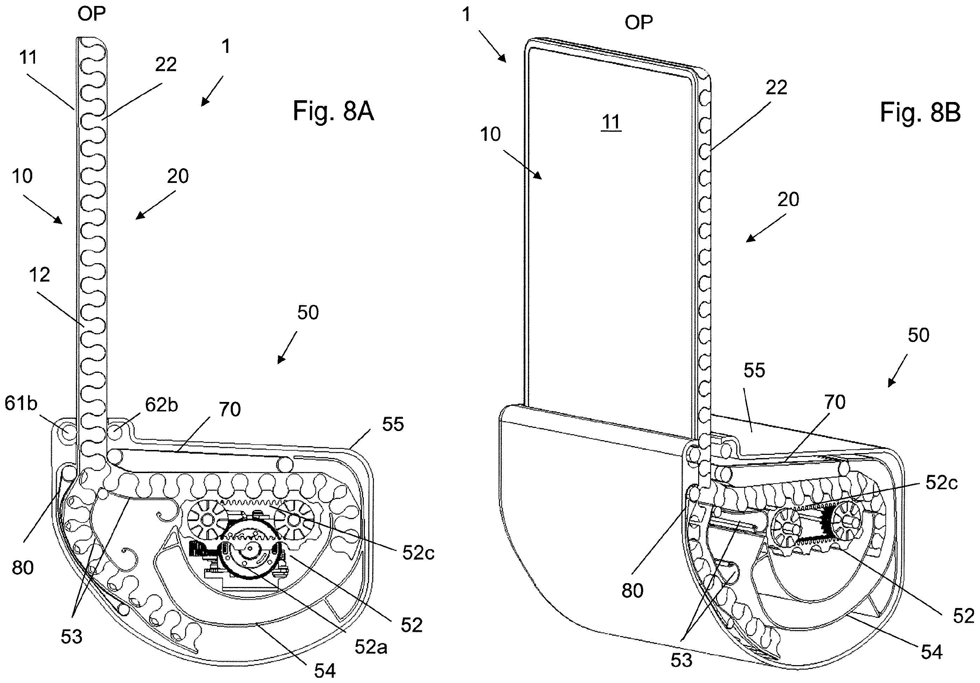

It should be noted that also other variants of positioning devices may be employed, such as the one described below with respect to Figures 8A, 8B.

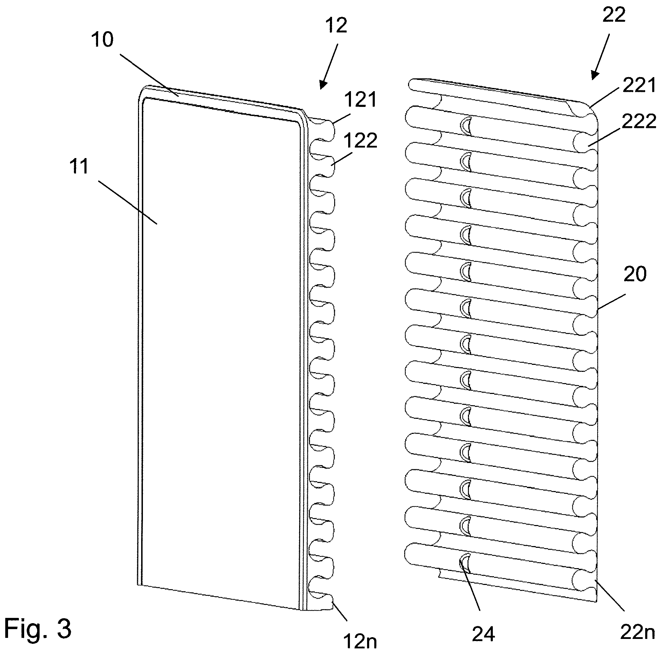

Fig. 3 shows schematic depictions of a first layer 10 and second layer 20 of a display device according to an embodiment of the invention, such as the one according to Figures 1 and 2, in greater detail. The flexible first layer 10 comprises the supporting structure 12 and the at least one flexible electronic display screen element 11, for example as the ones described above. At the side opposite the side at which the at least one flexible electronic display screen element 11 is disposed, a first interlocking structure with first interlocking elements 121, 122 up to 12n is disposed which is arranged and structured to be interlocked with the second interlocking structure of the second layer 20 comprising the supporting structure 22. The second interlocking structure of the second layer 20 comprises second interlocking elements 221, 222 up to 22n. It should be noted that the interlocking structures of the first and second layers may each comprise any number of interlocking elements which are suitable for interlocking or mating the layers 10 and 20 together in the operating position OP of the display device 1. At least some of the first interlocking elements 121-12n have a geometric shape which is complementary to the geometric shape of at least some of the second interlocking elements 221-22n. In this embodiment, the second layer 20 further comprises centering elements 24 which will be explained in more detail below.

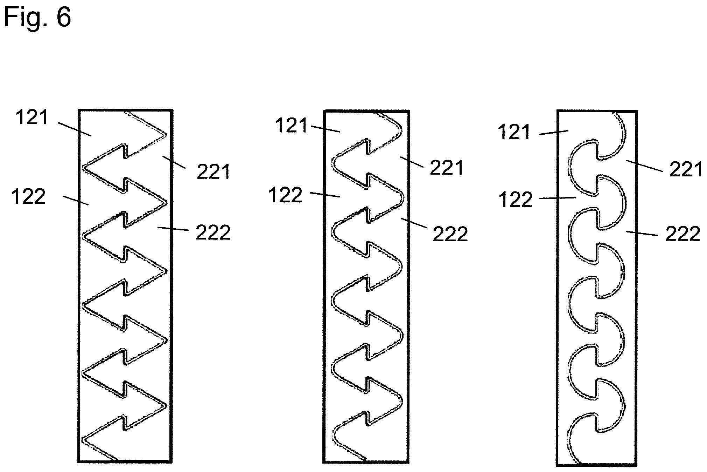

For example, according to embodiments, as shown in greater detail in Fig. 6, the geometric shapes of the respective interlocking elements 121-12n, 221-22n may have rounded portions (e.g., as shown in the right hand side depiction) or angled portions (e.g., as shown in the middle and left hand side depiction) which are configured to engage behind respective complementary rounded or angled portions of the respective other interlocking elements 121-12n, 221-22n. With such interlocking elements, a separation of the first and second layers 10, 20, which are coupled to one another in the operating position, from each other is not possible. Thus, the two layers 10, 20 cannot be pulled apart which contributes to improving rigidity of the display device in the operating position.

Preferably, at least one or more of the first interlocking elements 121-12n and/or at least one or more of the second interlocking elements 221-22n have a geometric shape such that, when they are interlocked, they are permanently interlocked to avoid a separation of the two layers. Preferably, the interlocking elements at the top region (or front end or front edge) of the supporting structures 12 and 22 (i.e. of the display device 1), when interlocked, are permanently interlocked to avoid a separation of the two layers from the top (or front end or front edge). As such, it is not possible for the user to intentionally or unintentionally separate the layers 10 and 20 from each other, e.g. by pulling the layers apart from each other or by inserting a thin device in between the two layers. That is, the two layers 10, 20 cannot be separated intentionally or unintentionally from the top or front edge.

The avoidance of a potential separation of the two layers 10 and 20 from the top can be achieved, for example, by providing a hook shape structure on interlocking element 221 with a corresponding or complementary (negative) shape on interlocking element 121, or vice versa. Further one or more of the interlocking elements 222 to 22n, and 122 to 12n may be shaped like this as well, depending on the particular needs. Other means are also possible, like screwing or gluing interlocking element 121 to interlocking elements 221/222, or vice versa, and/or further one or more of the other interlocking elements, to avoid separation from the top. Generally, it is advantageous for the operation, rigidity and handling of the display device 1 if the interlocking elements 221/222 and interlocking elements 121/122 (and further ones, if appropriate) are not separable when interlocked.

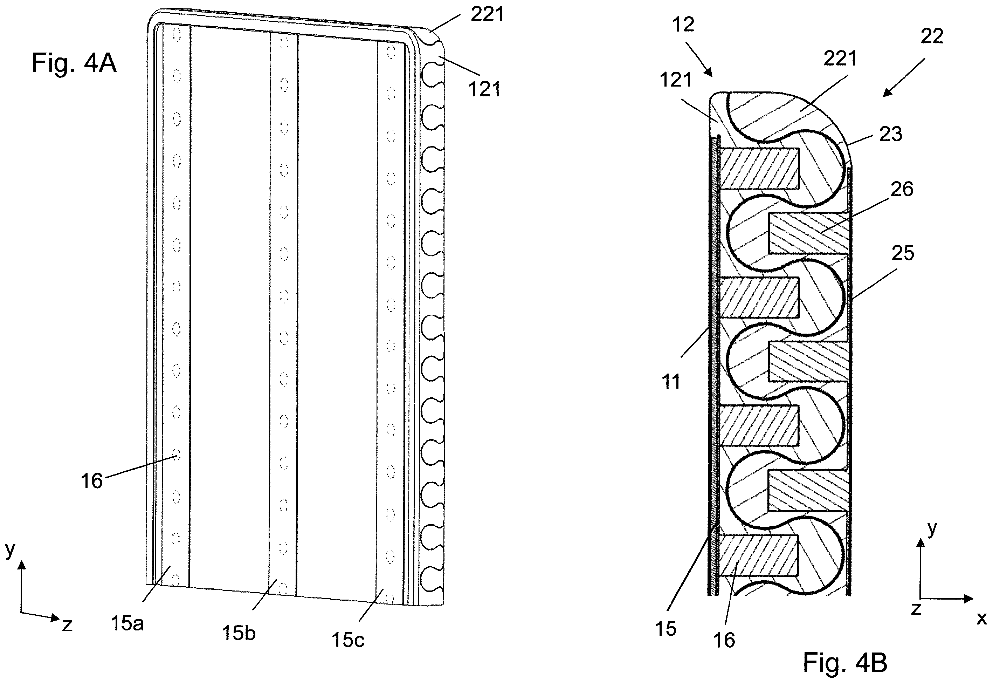

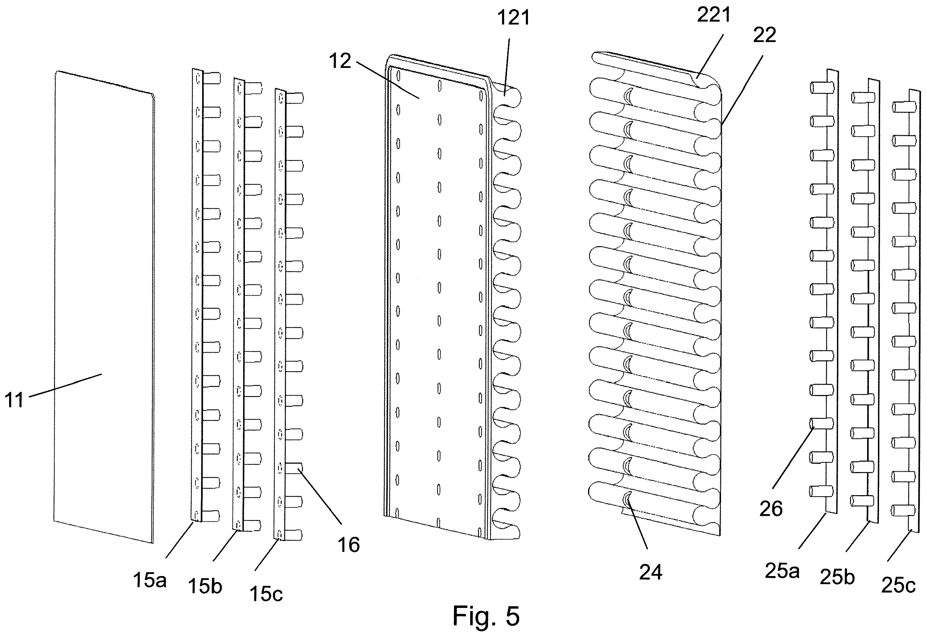

In the following, reference is made to Figures 4 and 5 which show further embodiments of the present invention. Fig. 4A shows a perspective view, Fig. 4B a cross-sectional view, and Fig. 5 an exploded view of a respective portion of a display device according to an embodiment of the invention.

For further improving rigidity of the display device in the operating position, at least one of the first and the second supporting structures 12, 22 of the layers 10 and 20, respectively, comprises at least one reinforcement material. In the present embodiment, both supporting structures 12 and 22 comprise a respective reinforcement material. In the present embodiment, the supporting structure 12 comprises metal plates 15a, 15b,15c, and the supporting structure 22 comprises metal plates 25a, 25b, 25c which are respectively extending along the plane of the respective layer 10, 20. While the supporting structures 12 and/or 22 may each comprise only one metal plate 15, 25, respectively, as shown for example in the cross-sectional view of Fig. 4B, they may also comprise each a plurality of metal plates 15a-15c, 25a-25c which are preferably spaced from one another, as shown in the embodiments of Fig. 4A and Fig. 5.

In a preferred embodiment, one or more of the metal plates may be formed from stainless steel or metal alloy. The at least one reinforcement material of the first and the second supporting structures 12, 22 may also comprise other material, particularly plastics material, ceramics, carbon fibers reinforced polymer, aramid fibers reinforced polymer, or fiber glass reinforced polymer, or a compound thereof. With such materials, a reinforcement for increasing rigidity is achieved while still providing flexibility so that the respective layer can be appropriately stored in the respective storage position and moved in and out from this storage position.

Generally, the reinforcement material of the first and the second supporting structures 12, 22, which extends along the plane of the respective layer, is configured to prevent elongation of the respective supporting structure in a direction parallel to the respective layer 10, 20 (i.e., in the y-direction of the three-dimensional x-y-z coordinate system as shown in Fig.4A and 4B) in the operating position OP in a state when the display device 1 is operated by a user. In other words, when the display device 1 is touched by the user, e.g. when the display screen element 11 is a touch screen, and the user applies a typical force for such operation, the reinforcement material prevents elongation of the respective supporting structure, which improves rigidity of the display device since it does not bend when the reinforcement material prevents elongation of the respective supporting structure.

According to an embodiment, the reinforcement material comprises a yield tensile strength between 200 and 3,700 MPa and/or a uniform elongation of max. 4% at 1500 MPa, both at room temperature.

A preferred reinforcement material is flexible, having a high yield tensile strength and low strain value (elongation value). If these conditions are achieved, then the material will stay in the elastic region, considering potential misuse force values that could be applied on a car display. This means after the misuse force stops, the material returns to the initial size/shape. Based on these criteria, a reinforcement material with a yield tensile strength of between 200 MPa and 3700 Mpa at room temperature is preferred.

In addition, there are materials with a yield tensile strength within or outside this range, but which have a uniform elongation value of max. 4% or lower at a force of 1500 MPa. Such materials would also be appropriate for the present concept.

In the embodiments in which the reinforcement material is or comprises one or more metal plates, one or more of the metal plates preferably have a thickness of between 0.5 and 2 mm. This provides good flexibility while having the sufficient strength, as described herein. A preferred thickness is in particular 1 mm.

Besides metal materials, such as stainless steel or metal alloy, useful reinforcement materials may also be composite materials like CFRP (Carbon Fibers Reinforced Polymer), AFRP (Aramid Fibers Reinforced Polymer, also known as KEV-LAR^{®}), or GFRP (Fiber Glass Reinforced Polymer).

According to a further embodiment, as also shown in the depictions of Figures 4A and 4B and Fig. 5, at least one of the first and second supporting structures 12, 22, preferably both, comprise a second reinforcement material which extends within one or more of the first and second interlocking elements 121-12n, 221-22n in a direction perpendicular to the plane of the respective layer 10, 20, i.e. in the x-direction of the coordinate system as shown in Fig. 4A and 4B. That is, the first and/or second supporting structures 12, 22 preferably comprise first and second reinforcement materials 15, 16 which are arranged in a perpendicular arrangement to one another, as shown, e.g., in the cross-sectional view of Fig. 4B.

In the embodiment shown, the second reinforcement material of the first layer 10 comprises one or more reinforcement pins 16 which extend within one or more of the first interlocking elements 121-12n. Preferably, a respective reinforcement pin 16 is arranged in each of the interlocking elements 121-12n. In addition, or alternatively, the second reinforcement material of the second layer 20 also comprises one or more reinforcement pins 26 which extend within one or more of the second interlocking elements 221-22n. Preferably, a respective reinforcement pin 26 is arranged in each of the interlocking elements 221-22n.

Similar to the first reinforcement material, the second reinforcement material may comprise at least one of the following materials as described above: metal, such as stainless steel; metal alloy; plastics material; ceramics; carbon fibers reinforced polymer; aramid fibers reinforced polymer; fiber glass reinforced polymer; or a compound thereof.

Such additional second reinforcement material preferably adds rigidity to the respective layer and, thus, layer arrangement of the display device and avoids movement between the first reinforcement material (e.g., the metal plates 15a-15c) and the respective embedding material of the supporting structure, such as elastomer material (e.g., the elastomer material 23 described below).

According to an embodiment, at least one of the first and the second layers 10, 20, preferably both, comprises a layer of elastomer material 23, as shown in Fig. 4B. For example, the elastomer material 23 is a rubber material which provides good flexibility for moving and storing the respective layer. On the other hand, one or more of the first and second interlocking elements 121-12n, 221-22n may comprise a plastics material, such as a polycarbonate material, attached to the layer of elastomer material 23 and providing higher rigidity than the elastomer material.

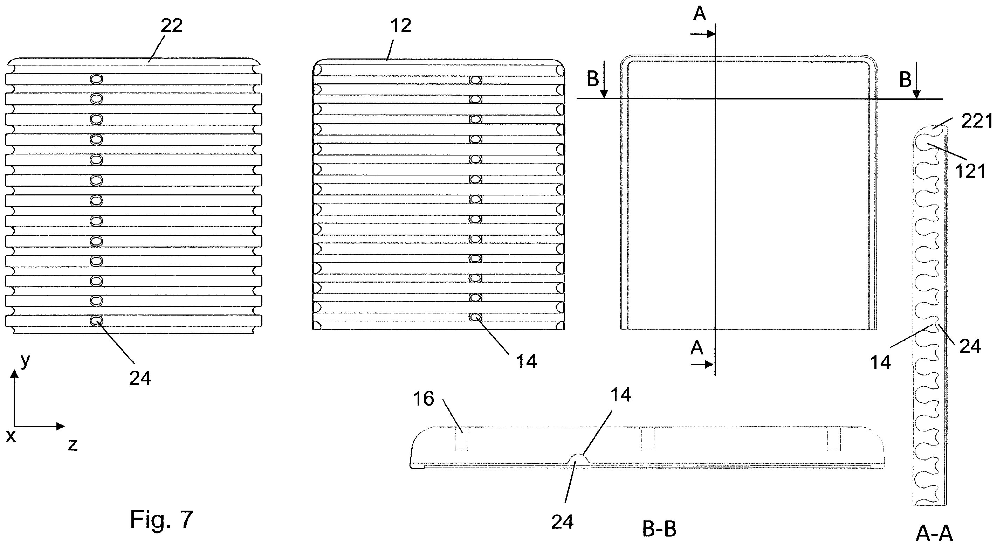

Fig. 7 shows schematic depictions of a supporting structure 12 of the first layer and supporting structure 22 of the second layer of a display device with centering elements according to embodiments of the invention. With such centering elements, a side movement of the flexible layers 10 and 20 with respect to each other in z-direction of the x-y-z coordinate system can be prevented. Thus, rigidity in multiple directions of the display device can be improved.

For example, at least one of the first layer 10 and second layer 20 comprises one or more centering elements 24 which are configured to engage with a corresponding counter element 14 of the respective other of the first layer 10 and second layer 20. According to an embodiment, the one or more centering elements 24 have the form of an elevation or a recession formed at one side of the respective layer 10, 20, wherein the corresponding counter element 14 has the form of a recession or an elevation, respectively. This is shown in the embodiment of Fig. 7 in the cross-sectional views along lines B-B and A-A. Thus, the respective centering element 24 protrudes into the respective recession of the counter element 14, which prevents a relative movement of the two layers to each other if the interlocking elements are interlocked with each other, so that the elevation or protrusion cannot move out from the respective recession. In this way, the centering element 24 and counter element 14 are configured to restrict movement of one or both layers 10, 20 relative to the respective other of the layers in a direction parallel to the plane of the first and second layers 10, 20, i.e. the z-direction of the shown x-y-z coordinate system, when the first and second layers 10, 20 are coupled to each other in the operating position OP.

In the following, reference is made to Fig. 8A which shows a side view of a display device according to a further embodiment of the invention, while Fig. 8B shows a perspective view of the display device according to the embodiment of Fig. 8A.

Like the display device described above with respect to Figures 1 and 2, the display device 1 has a flexible display panel 10 (flexible first layer 10) that can be rolled, but in the present embodiment within a housing 55, particularly in a lower part thereof, of the positioning device 50 for placing it in the storage position when the display device 1 is not in use. The first layer 10 and its components can be the same as described above, thus will not be explained in detail again.

The display device 1 further includes a flexible support panel 20 (flexible second layer 20), as described above, that can be rolled up in the storage position separate from the first layer 10 by means of a driving mechanism 52 which may comprise the same or similar components as described above with respect to Figures 1 and 2, such as an electric motor, driving gears and transmission belt which engages the interlocking elements of the supporting structure 22 of the second layer 20. When moving into the storage position, the second layer 20 is guided into the inner housing 54 (formed like a guiding shell) of the positioning device 50. A guiding spring 53, such as made from stainless steel, is positioned for separating and guiding the layers 10 and 20 when the layers are moved into the storage position. The positioning device may also include the rollers 61b, 62b as described above with reference to Figures 1 and 2 for improving stability and rigidity of the layer arrangement in the operating position.

The display device 1 can be rolled out into the operating position OP and rolled back into the storage position, e.g., underneath an upper surface of a dashboard of a vehicle, by means of the positioning device 50, particularly its electric motor 52a which in turn moves the transmission belt 52c via gears which mates with the interlocking structure of the second layer 20. With moving the interlocking structure of the second layer 20, the positioning device 50 also moves the interlocking structure of the first layer 10 which engages with the second layer 20 as they are brought together by the positioning device 50 via guiding spring 53.

The positioning device 50 thus moves the first layer 10 and second layer 20 from the respective separate storage positions towards each other into the operating position OP by bringing the first and second interlocking elements successively to one another into a mutual engagement, so that the first layer 10 and the second layer 20 are successively coupled to each other. Analogously, for example, when the display device 1 shall be stored inside the dashboard, the positioning device 50 moves the second layer 20 (and with it also the first layer 10) back from the operating position OP into the respective storage positions thereby releasing the mutual engagement of respective ones of the interlocking elements via the guiding spring 53.

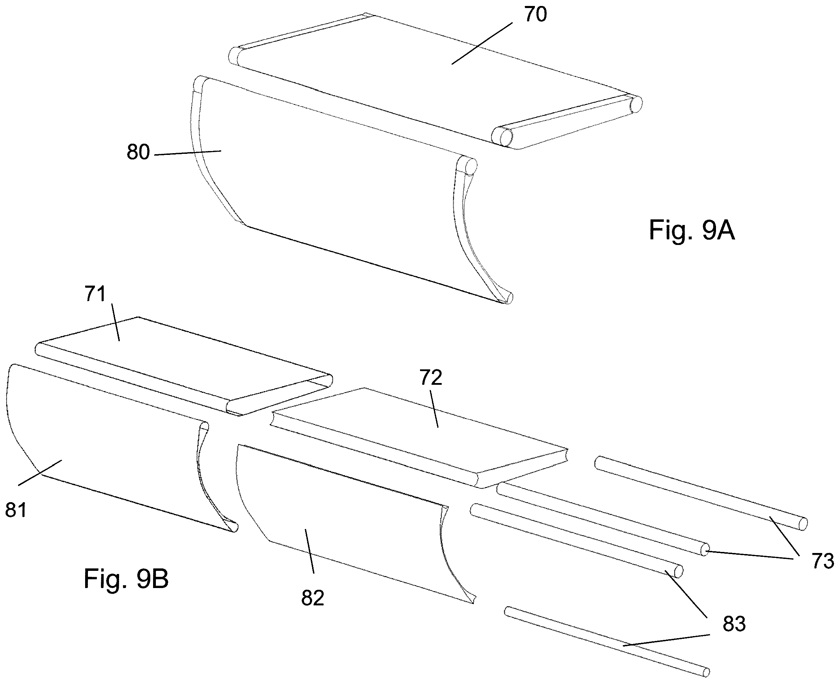

The positioning device 50 further comprises a first guidance device 70 and a second guidance device 80. In this regard, Fig. 9A shows the first and second guidance devices 70, 80 of a display device according to the embodiment of Fig. 8A in a isolated depiction, whereas Fig. 9B shows elements of the first and second guidance devices according to Fig. 9A in exploded view. The driving mechanism 52 engages the second layer 20 at a first engagement side of the second layer 20 for moving the first and second layers 10, 20 from the respective storage position to the operating position OP, as described above. The first guidance device 70 provides a counterforce on second engagement side of the second layer 20 which is opposite the first engagement side against the engagement force applied by the driving mechanism 52.

According to an embodiment, the first guidance device 70 comprises at least two rollers 73, as shown in detail in Fig. 9B, which are spanning a two-dimensional first guidance material 71 (such as fabric or textile material, e.g. in the form of a textile layer) between them. Within the guidance material 71, i.e. between the opposing sides thereof, a support material 72 may be arranged. The guidance material 71 guided and held in place by the rollers 73 provides the counterforce to the second layer 20 and driving mechanism 52 while the second layer 20 is moved by the driving mechanism 52 from or into the storage position. As such, the guidance material 71 is a kind of antifriction assembly for improving the driving mechanism and its functionality.

In addition, or alternatively, according to an embodiment, the positioning device 50 further comprises a second guidance device 80 which is provided on a side of the one or more flexible electronic display screen elements 11 when the first layer 10 is moving in or from the storage position, and has the structure and function of protecting the one or more electronic display screen elements 11 against scratches during movement. As shown in greater detail in Fig. 9B, the second guidance device 80 may also comprise at least two rollers 83 which are spanning a two-dimensional second guidance material 81 between them. Within the guidance material 81, i.e. between the opposing sides thereof and the rollers 83, a support material 82 may be arranged. Like the first guidance material 71, the second guidance material may be a fabric or textile material, e.g. in the form of a textile layer. As such, the guidance material 81 is also a kind of antifriction assembly for improving the driving mechanism and its functionality.

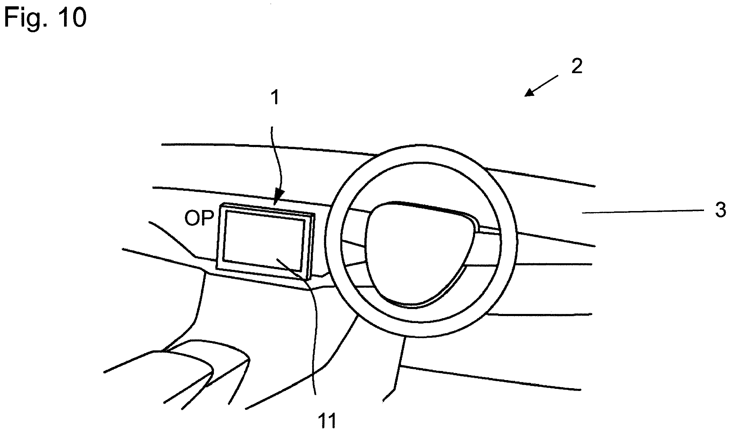

According to an advantageous embodiment, the display device can be used in a vehicle, such as an automobile, e.g. as a display screen of a head unit employed as a touch screen. For example, as schematically shown in Fig. 10, a vehicle 2, such as an automobile, comprises a dashboard 3, wherein the display device 1 may be installed within the dashboard 3, for example, in a separate housing, such as housing 55 shown in Fig. 8A, 8B. Accordingly, the dashboard has an opening (not shown), such as a slit, through which the layers 10 and 20 are moved in and out from the storage position. The positioning device 50, e.g. having a structure as described according to the above embodiments, moves the first layer 10 and second layer 20 from the respective separate storage positions towards each other into the operating position OP in which the electronic display screen element 11 is operable and positioned outside the dashboard 3, i.e. can be operated by the user. In this regard, Fig. 10 schematically shows a state in which the display device 1 is in the operating position OP.

## Claims

1. A display device (1) comprising:
- a flexible first layer (10) comprising a first supporting structure (12) and at least one flexible electronic display screen element (11),
- a flexible second layer (20) comprising a second supporting structure (22),
- the first layer (10) comprising a first side at which the at least one electronic display screen element (11) is disposed and a second side opposite the first side which comprises a first interlocking structure with first interlocking elements (121-12n),
- the second layer (20) comprising a first side which faces the second side of the first layer (10) and which comprises a second interlocking structure with second interlocking elements (221-22n),
- a positioning device (50) which is configured to move the first layer (10) and second layer (20) from respective separate storage positions towards each other into an operating position (OP), while bringing the first and second interlocking elements (121-12n, 221-22n) successively to one another into a mutual engagement of respective ones of the first and second interlocking elements (121-12n, 221-22n), such that the first layer (10) and the second layer (20) are coupled to each other in the operating position (OP) by the first and second interlocking elements (121-12n, 221-22n), and is configured to move the first layer (10) and second layer (20) back from the operating position (OP) into the respective storage positions thereby releasing the mutual engagement of respective ones of the first and second interlocking elements (121-12n, 221-22n), wherein at least some of the first interlocking elements (121-12n) have a first geometric shape and at least some of the second interlocking elements (221-22n) have a second geometric shape which is complementary to the first geometric shape, **characterized in that** the first and second geometric shapes of the interlocking elements (121-12n, 221-22n) have rounded or angled portions which are configured to engage behind respective complementary rounded or angled portions of the respective other interlocking elements (121-12n, 221-22n) so that, when in mutual engagement, at least one of the first interlocking elements (121-12n) engages behind a respective one of the second interlocking elements (221-22n), and **in that** -at least one of the first and the second supporting structures (12, 22) comprises at least one reinforcement material (15, 15a-15c, 25, 25a-25c) which extends along the plane of the respective layer (10, 20) and comprises at least one of a yield tensile strength between 200 and 3,700 MPa and a uniform elongation of max. 4% at 1500 MPa at room temperature to prevent elongation of the respective supporting structure (12, 22) in a longitudinal direction (y) in the operating position (OP) in a state when the display device (1) is operated by a user.

2. The display device according to claim 1, wherein the at least one reinforcement material is a first reinforcement material (15, 15a-15c, 25, 25a-25c) which comprises at least one metal plate (15, 15a-15c, 25, 25a-25c) extending along the plane of the respective layer (10, 20), particularly comprises a plurality of metal plates (15a-15c, 25a-25c) which are spaced from one another, more particularly the at least one metal plate (15, 15a-15c, 25, 25a-25c) having a thickness of between 0.5 and 2 mm.

3. The display device according to one of claims 1 to 2, wherein the at least one reinforcement material is a first reinforcement material and at least one of the first and second supporting structures (12, 22) comprises a second reinforcement material (16, 26) which extends within one or more of the first and second interlocking elements (121-12n, 221-22n) in a direction (x) perpendicular to the plane of the respective layer (10, 20).

4. The display device according to claim 3, wherein the second reinforcement material comprises one or more reinforcement pins (16, 26) which extend within one or more of the first and second interlocking elements (121-12n, 221-22n).

5. The display device according to one of claims 1 to 4, wherein the at least one reinforcement material (15, 15a-15c, 25, 25a-25c) comprises at least one of the following list consisting of: metal, particularly stainless steel; metal alloy; plastics material; ceramics; carbon fibers reinforced polymer; aramid fibers reinforced polymer; fiber glass reinforced polymer; or a compound thereof.

6. The display device according to one of claims 3 or 4, wherein the second reinforcement material (16, 26) comprises at least one of the following list consisting of: metal, particularly stainless steel; metal alloy; plastics material; ceramics; carbon fibers reinforced polymer; aramid fibers reinforced polymer; fiber glass reinforced polymer; or a compound thereof.

7. The display device according to one of claims 1 to 6, wherein at least one of the first and the second layers (10, 20) comprises a layer of elastomer material (23), particularly a rubber material, and one or more of the first and second interlocking elements (121-12n, 221-22n) comprises a plastics material, particularly a polycarbonate material, attached to the layer of elastomer material (23).

8. The display device according to one of claims 1 to 7, wherein at least one of the first layer (10) and second layer (20) comprises at least one centering element (24) which is configured to engage with a corresponding counter element (14) of the respective other of the first layer (10) and second layer (20), wherein the centering element (24) and counter element (14) are configured to restrict movement of one of the first and second layers (10, 20) relative to the respective other of the first and second layers (10, 20) in a direction (z) parallel to the plane of the first and second layers (10, 20) when the first and second layers (10, 20) are coupled to each other in the operating position (OP).

9. The display device according to claim 8, wherein the one or more centering elements (24) have the form of an elevation or a recession formed at one side of at least one of the first and second layers (10, 20).

10. The display device according to one of claims 1 to 9, wherein the positioning device (50) comprises
- a driving mechanism (52) which engages at least one of the first and second layers (10, 20) at a first engagement side of the one of the first and second layers (10, 20) for moving the first and second layers (10, 20) from the respective storage position to the operating position (OP),
- a first guidance device (70) which is configured to provide a counterforce on a second engagement side of the one of the first and second layers (10, 20) opposite the first engagement side against an engagement force applied by the driving mechanism (52), wherein the first guidance device (70) comprises at least two rollers (73) which are spanning a two-dimensional first guidance material(71) between them which provides the counterforce to the one of the first and second layers (10, 20),
and/or
- a second guidance device (80) which is provided on a side of the at least one flexible electronic display screen element (11) when the first layer (10) is moving in or from the storage position for protecting the electronic display screen element (11) against scratches during movement, wherein the second guidance device (80) comprises at least two rollers (83) which are spanning a two-dimensional second guidance material (81) between them.

11. A dashboard (3) comprising a display device (1) according to one of the preceding claims, wherein the positioning device (50) is configured to move the first layer (10) and second layer (20) from the respective separate storage positions towards each other into the operating position (OP) in which the at least one electronic display screen element (11) is operable and positioned outside the dashboard (3).

12. A vehicle (2) comprising a display device (1) according to one of the claims 1 to 10, or a dashboard (3) according to claim 11.

## Patentansprüche

1. Anzeigevorrichtung (1), die Folgendes aufweist:
- eine flexible erste Schicht (10), die eine erste Trägerstruktur (12) und mindestens ein flexibles elektronisches Anzeigeschirmelement (11) aufweist,
- eine flexible zweite Schicht (20), die eine zweite Trägerstruktur (22) aufweist,
- wobei die erste Schicht (10) eine erste Seite besitzt, auf der das mindestens eine elektronische Anzeigeschirmelement (11) angeordnet ist, sowie eine der ersten Seite gegenüberliegende zweite Seite besitzt, die eine erste Verriegelungsstruktur mit ersten Verriegelungselementen (121-12n) aufweist,
- wobei die zweite Schicht (20) eine erste Seite besitzt, die der zweiten Seite der ersten Schicht (10) zugewandt ist und eine zweite Verriegelungsstruktur mit zweiten Verriegelungselementen (221-22n) aufweist,
- eine Positioniervorrichtung (50), die dazu ausgebildet ist, die erste Schicht (10) und die zweite Schicht (20) aus jeweiligen getrennten Aufbewahrungspositionen aufeinander zu in eine Betriebsposition (OP) zu bewegen, während sie die ersten und zweiten Verriegelungselemente (121-12n, 221-22n) sukzessive zueinander in gegenseitigen Eingriff von jeweiligen der ersten und zweiten Verriegelungselemente (121-12n, 221-22n) bringt, so dass die erste Schicht (10) und die zweite Schicht (20) in der Betriebsposition (OP) durch die ersten und zweiten Verriegelungselemente (121-12n, 221-22n) miteinander gekoppelt sind, und die dazu ausgebildet ist, die erste Schicht (10) und die zweite Schicht (20) aus der Betriebsposition (OP) zurück in die jeweilige Aufbewahrungsposition zu bewegen und dabei den gegenseitigen Eingriff von jeweiligen der ersten und der zweiten Verriegelungselemente (121-12n, 221-22n) zu lösen,
- wobei mindestens einige der ersten Verriegelungselemente (121-12n) eine erste geometrische Form aufweisen und mindestens einige der zweiten Verriegelungselemente (221-22n) eine zweite geometrische Form aufweisen, die komplementär zu der ersten geometrischen Form ist,
**dadurch gekennzeichnet,**
**dass** die erste und die zweite geometrische Form der Verriegelungselemente (121-12n, 221-22n) abgerundete oder abgewinkelte Bereiche aufweisen, die dazu ausgebildet sind, jeweilige komplementäre abgerundete oder abgewinkelte Bereiche der jeweiligen anderen Verriegelungselemente (121-12n, 221-22n) zu hintergreifen, so dass dann, wenn sich diese in gegenseitigem Eingriff befinden, mindestens eines der ersten Verriegelungselemente (121-12n) ein jeweiliges der zweiten Verriegelungselemente (221-22n) hintergreift,
und **dass** mindestens eine von der ersten und der zweiten Stützstruktur (12, 22) mindestens ein Verstärkungsmaterial (15, 15a-15c, 25, 25a-25c) aufweist, das sich entlang der Ebene der jeweiligen Schicht (10, 20) erstreckt, und mindestens eines von einer Streckgrenze zwischen 200 und 3.700 MPa und einer Gleichmaßdehnung von maximal 4 % bei 1.500 MPa bei Raumtemperatur aufweist, um eine Dehnung der jeweiligen Stützstruktur (12, 22) in Längsrichtung (y) in der Betriebsposition (OP) in einem Zustand zu verhindern, in dem die Anzeigevorrichtung (1) von einem Nutzer betätigt wird.

2. Anzeigevorrichtung nach Anspruch 1,
wobei das mindestens eine Verstärkungsmaterial ein erstes Verstärkungsmaterial (15, 15a-15c, 25, 25a-25c) ist, das mindestens eine sich entlang der Ebene der jeweiligen Schicht (10, 20) erstreckende Metallplatte (15, 15a-15c, 25, 25a-25c) aufweist, insbesondere mehrere voneinander beabstandete Metallplatten (15a-15c, 25a-25c) aufweist, wobei im Spezielleren die mindestens eine Metallplatte (15, 15a-15c, 25, 25a-25c) eine Dicke zwischen 0,5 und 2 mm aufweist.

3. Anzeigevorrichtung nach einem der Ansprüche 1 bis 2,
wobei das mindestens eine Verstärkungsmaterial ein erstes Verstärkungsmaterial ist und mindestens eine von der ersten und der zweiten Stützstruktur (12, 22) ein zweites Verstärkungsmaterial (16, 26) aufweist, das sich im Inneren eines oder mehrerer der ersten und zweiten Verriegelungselemente (121-12n, 221-22n) in einer Richtung (x) rechtwinklig zu der Ebene der jeweiligen Schicht (10, 20) erstreckt.

4. Anzeigevorrichtung nach Anspruch 3,
wobei das zweite Verstärkungsmaterial einen oder mehrere Verstärkungsstifte (16, 26) aufweist, die sich im Inneren eines oder mehrerer der ersten und der zweiten Verriegelungselemente (121-12n, 221-22n) erstrecken.

5. Anzeigevorrichtung nach einem der Ansprüche 1 bis 4,
wobei das mindestens eine Verstärkungsmaterial (15, 15a-15c, 16, 25, 25a-25c, 26) mindestens eines aus der nachfolgenden Liste umfasst: Metall, insbesondere rostfreier Stahl; Metalllegierung; Kunststoffmaterial; Keramik; mit Kohlenstofffasern verstärktes Polymer; mit Aramidfasern verstärktes Polymer; mit Glasfasern verstärktes Polymer; oder eine Verbindung davon.

6. Anzeigevorrichtung nach einem der Ansprüche 3 oder 4,
wobei das zweite Verstärkungsmaterial (16, 26) mindestens eines aus der nachfolgenden Liste umfasst: Metall, insbesondere rostfreier Stahl; Metalllegierung; Kunststoffmaterial; Keramik; mit Kohlenstofffasern verstärktes Polymer; mit Aramidfasern verstärktes Polymer; mit Glasfasern verstärktes Polymer; oder eine Verbindung davon.

7. Anzeigevorrichtung nach einem der Ansprüche 1 bis 6,
wobei mindestens eine der ersten und der zweiten Schicht (10, 20) eine Schicht aus Elastomermaterial (23), insbesondere einem Gummimaterial, umfasst und eines oder mehrere der ersten und zweiten Verriegelungselemente (121-12n, 221-22n) ein Kunststoffmaterial, insbesondere ein Polycarbonatmaterial, umfasst, das an der Schicht aus Elastomermaterial (23) angebracht ist.

8. Anzeigevorrichtung nach einem der Ansprüche 1 bis 7,
wobei mindestens eine der ersten Schicht (10) und der zweiten Schicht (20) mindestens ein Zentrierelement (24) aufweist, das dazu ausgebildet ist, mit einem entsprechenden Gegenelement (14) der jeweils anderen von der ersten Schicht (10) und der zweiten Schicht (20) zusammenzuwirken, wobei das Zentrierelement (24) und das Gegenelement (14) dazu ausgebildet sind, eine Bewegung von einer der ersten und der zweiten Schicht (10, 20) relativ zu der jeweils anderen von der ersten und der zweiten Schicht (10, 20) in einer Richtung (z) parallel zu der Ebene der ersten und der zweiten Schicht (10, 20) einzuschränken, wenn die erste und zweite Schicht (10, 20) in der Betriebsposition (OP) miteinander gekoppelt sind.

9. Anzeigevorrichtung nach Anspruch 8,
wobei das eine oder die mehreren Zentrierelemente (24) die Form einer Erhebung oder einer Vertiefung aufweisen, die auf einer Seite von mindestens einer der ersten und der zweiten Schicht (10, 20) gebildet ist.

10. Anzeigevorrichtung nach einem der Ansprüche 1 bis 9,
wobei die Positioniervorrichtung (50) Folgendes aufweist:
- einen Antriebsmechanismus (52), der an mindestens einer der ersten und der zweiten Schichten (10, 20) an einer ersten Angreifseite der einen von der ersten und der zweiten Schicht (10, 20) angreift, um die erste und zweite Schicht (10, 20) von der jeweiligen Aufbewahrungsposition in die Betriebsposition (OP) zu bewegen,
- eine erste Führungsvorrichtung (70), die dazu ausgebildet ist, auf einer der ersten Angreifseite gegenüberliegenden zweiten Angreifseite der einen von der ersten und der zweiten Schicht (10, 20) eine Gegenkraft gegen eine von dem Antriebsmechanismus (52) aufgebrachte Angreifkraft bereitzustellen, wobei die erste Führungsvorrichtung (70) mindestens zwei Rollen (73) aufweist, die ein zweidimensionales erstes Führungsmaterial (71) zwischen sich spannen, das die Gegenkraft an der einen von der ersten und der zweiten Schicht (10, 20) bereitstellt, und/oder
- eine zweite Führungsvorrichtung (80), die auf einer Seite des mindestens einen flexiblen elektronischen Anzeigeschirmelements (11) vorgesehen ist, wenn sich die erste Schicht (10) in die oder aus der Aufbewahrungsposition bewegt, um das elektronische Anzeigeschirmelement (11) während der Bewegung vor Kratzern zu schützen, wobei die zweite Führungsvorrichtung (80) mindestens zwei Rollen (83) aufweist, die ein zweidimensionales zweites Führungsmaterial (81) zwischen sich spannen.

11. Armaturenbrett (3) mit einer Anzeigevorrichtung (1) gemäß einem der vorhergehenden Ansprüche,
wobei die Positioniervorrichtung (50) dazu ausgebildet ist, die erste Schicht (10) und die zweite Schicht (20) aus den jeweiligen getrennten Aufbewahrungspositionen aufeinander zu in die Betriebsposition (OP) zu bewegen, in der das mindestens eine elektronische Anzeigeschirmelement (11) betätigbar und außerhalb des Armaturenbretts (3) positioniert ist.

12. Fahrzeug (2) mit einer Anzeigevorrichtung (1) gemäß einem der Ansprüche 1 bis 10 oder einem Armaturenbrett (3) gemäß Anspruch 11.

## Revendications

1. Un dispositif d'affichage (1) comprenant :
- une première couche flexible (10) comprenant une première structure de support (12) et au moins un élément d'écran d'affichage électronique flexible (11),
- une deuxième couche flexible (20) comprenant une deuxième structure de support (22),
- la première couche (10) comprenant un premier côté sur lequel est disposé le ou les éléments d'écran d'affichage électronique (11) et un deuxième côté opposé au premier côté qui comprend une première structure d'interverrouillage avec des premiers éléments d'interverrouillage (121-12n),
- la deuxième couche (20) comprenant un premier côté qui fait face au deuxième côté de la première couche (10) et qui comprend une deuxième structure d'interverrouillage avec des deuxièmes éléments d'interverrouillage (221-22n),
- un dispositif de positionnement (50) qui est configuré pour déplacer la première couche (10) et la deuxième couche (20) depuis leurs positions de stockage respectives l'une vers l'autre en position de fonctionnement (OP), tout en amenant successivement les premiers et deuxièmes éléments d'interverrouillage (121-12n, 221-22n) dans un engagement mutuel des éléments d'interverrouillage respectifs (121-12n, 221-22n), de sorte que la première couche (10) et la deuxième couche (20) soient couplées l'une à l'autre en position de fonctionnement (OP) par les premiers et deuxièmes éléments d'interverrouillage (121-12n, 221-22n), et est configuré pour déplacer la première couche (10) et la deuxième couche (20) de la position de fonctionnement (OP) vers les positions de stockage respectives, libérant ainsi l'engagement mutuel des éléments d'interverrouillage respectifs (121-12n, 221-22n), dans lequel
au moins certains des premiers éléments d'interverrouillage (121-12n) ont une première forme géométrique et au moins certains des deuxièmes éléments d'interverrouillage (221-22n) ont une deuxième forme géométrique qui est complémentaire à la première forme géométrique, **caractérisé en ce que**
les premières et deuxièmes formes géométriques des éléments d'interverrouillage (121-12n, 221-22n) ont des portions arrondies ou angulaires qui sont configurées pour s'engager derrière des portions arrondies ou angulaires complémentaires des autres éléments d'interverrouillage respectifs (121-12n, 221-22n) de sorte que, lorsqu'ils sont en engagement mutuel, au moins un des premiers éléments d'interverrouillage (121-12n) s'engage derrière un des deuxièmes éléments d'interverrouillage respectifs (221-22n), et **en ce que**
au moins une des premières et des deuxièmes structures de support (12, 22) comprend au moins un matériau de renforcement (15, 15a-15c, 25, 25a-25c) qui s'étend le long du plan de la couche respective (10, 20) et comprend au moins un des matériaux de renforcement.
résistance entre 200 et 3 700 MPa et un allongement uniforme de max. 4 % à 1 500 MPa à température ambiante pour empêcher l'allongement de la structure de support respective (12, 22) dans une direction longitudinale (y) en position de fonctionnement (OP) dans un état lorsque le dispositif d'affichage (1) est utilisé par un utilisateur.

2. Le dispositif d'affichage selon la revendication 1, dans lequel le ou les matériaux de renforcement comprennent un premier matériau de renforcement (15, 15a-15c, 25, 25a-25c) qui comprend au moins une plaque métallique (15, 15a-15c, 25, 25a-25c) s'étendant le long du plan de la couche respective (10, 20), comprenant particulièrement une pluralité de plaques métalliques (15a-15c, 25a-25c) espacées les unes des autres, plus particulièrement la ou les plaques métalliques (15, 15a-15c, 25, 25a-25c) ayant une épaisseur comprise entre 0,5 et 2 mm.

3. Le dispositif d'affichage selon l'une des revendications 1 à 2, dans lequel le ou les matériaux de renforcement comprennent un premier matériau de renforcement et au moins une des premières et des deuxièmes structures de support (12, 22) comprend un deuxième matériau de renforcement (16, 26) qui s'étend à l'intérieur d'un ou plusieurs des premiers et deuxièmes éléments d'interverrouillage (121-12n, 221-22n) dans une direction (x) perpendiculaire au plan de la couche respective (10, 20).

4. Le dispositif d'affichage selon la revendication 3, dans lequel le deuxième matériau de renforcement comprend un ou plusieurs broches de renforcement (16, 26) qui s'étendent à l'intérieur d'un ou plusieurs des premiers et deuxièmes éléments d'interverrouillage (121-12n, 221-22n).

5. Le dispositif d'affichage selon l'une des revendications 1 à 4, dans lequel le ou les matériaux de renforcement (15, 15a-15c, 25, 25a-25c) comprennent au moins un des éléments de la liste suivante : métal, particulièrement acier inoxydable ; alliage métallique ; matériau plastique ; céramique ; polymère renforcé de fibres de carbone ; polymère renforcé de fibres d'aramide ; polymère renforcé de fibres de verre ; ou un composé de ceux-ci.

6. Le dispositif d'affichage selon l'une des revendications 3 ou 4, dans lequel le deuxième matériau de renforcement (16, 26) comprend au moins un des éléments de la liste suivante : métal, particulièrement acier inoxydable ; alliage métallique ; matériau plastique ; céramique ; polymère renforcé de fibres de carbone ; polymère renforcé de fibres d'aramide ; polymère renforcé de fibres de verre ; ou un composé de ceux-ci.

7. Le dispositif d'affichage selon l'une des revendications 1 à 6, dans lequel au moins une des premières et des deuxièmes couches (10, 20) comprend une couche de matériau élastomère (23), particulièrement un matériau en caoutchouc, et un ou plusieurs des premiers et deuxièmes éléments d'interverrouillage (121-12n, 221-22n) comprend un matériau plastique, particulièrement un matériau en polycarbonate, attaché à la couche de matériau élastomère (23).

8. Le dispositif d'affichage selon l'une des revendications 1 à 7, dans lequel au moins une des première couche (10) et deuxième couche (20) comprend au moins un élément de centrage (24) qui est configuré pour s'engager avec un contre-élément correspondant (14) de l'autre couche respective parmi la première couche (10) et la deuxième couche (20), dans lequel l'élément de centrage (24) et le contre-élément (14) sont configurés pour restreindre le mouvement de l'une des première et deuxième couches (10, 20) par rapport à l'autre couche respective parmi la première et la deuxième couches (10, 20) dans une direction (z) parallèle au plan des première et deuxième couches (10, 20) lorsque les première et deuxième couches (10, 20) sont couplées l'une à l'autre en position de fonctionnement (OP).

9. Le dispositif d'affichage selon la revendication 8, dans lequel le ou les éléments de centrage (24) ont la forme d'une élévation ou d'une récession formée sur un côté d'au moins une des première et deuxième couches (10, 20).

10. Le dispositif d'affichage selon l'une des revendications 1 à 9, dans lequel le dispositif de positionnement (50) comprend
- un mécanisme d'entraînement (52) qui s'engage avec au moins une des première et deuxième couches (10, 20) sur un premier côté d'engagement de l'une des première et deuxième couches (10, 20) pour déplacer les première et deuxième couches (10, 20) de la position de stockage respective vers la position de fonctionnement (OP),
- un premier dispositif de guidage (70) qui est configuré pour fournir une contre-force sur un deuxième côté d'engagement de l'une des première et deuxième couches (10, 20) opposé au premier côté d'engagement contre une force d'engagement appliquée par le mécanisme d'entraînement (52), dans lequel le premier dispositif de guidage (70) comprend au moins deux rouleaux (73) qui tendent un premier matériau de guidage bidimensionnel (71) entre eux, lequel fournit la contre-force à l'une des première et deuxième couches (10, 20), et/ou
- un deuxième dispositif de guidage (80) qui est disposé sur un côté de l'au moins un élément d'écran d'affichage électronique flexible (11) lorsque la première couche (10) se déplace vers ou depuis la position de stockage pour protéger l'élément d'écran d'affichage électronique (11) contre les rayures pendant le mouvement, dans lequel le deuxième dispositif de guidage (80) comprend au moins deux rouleaux (83) qui tendent un deuxième matériau de guidage bidimensionnel (81) entre eux.

11. Un tableau de bord (3) comprenant un dispositif d'affichage (1) selon l'une des revendications précédentes, dans lequel le dispositif de positionnement (50) est configuré pour déplacer la première couche (10) et la deuxième couche (20) depuis leurs positions de stockage séparées respectives l'une vers l'autre en position de fonctionnement (OP) dans laquelle l'au moins un élément d'écran d'affichage électronique (11) est opérationnel et positionné à l'extérieur du tableau de bord (3).

12. Un véhicule (2) comprenant un dispositif d'affichage (1) selon l'une des revendications 1 à 10, ou un tableau de bord (3) selon la revendication 11.
